# EUROPÄISCHE PATENTSCHRIFT

(11) **EP 0 725 400 B1**
(45) Veröffentlichungstag und Bekanntmachung des Hinweises auf die Patenterteilung: **16.06.1999**
(21) Anmeldenummer: 96101161.6
(22) Anmeldetag: 27.01.1996
(51) Int. Cl.: G11B 33/04

(54) **Halterung für Compact Discs**
Holding device for compact discs
Dispositif de support pour disques compacts

(30) Priorität: 02.02.1995 DE 19503264
(43) Veröffentlichungstag der Anmeldung: 07.08.1996
(73) Patentinhaber: Luckow, Hans-Jürgen, D-24558 Henstedt-Rhen (DE)
(72) Erfinder: Luckow, Hans-Jürgen, D-24558 Henstedt-Rhen (DE)
(74) Vertreter: Klickow, Hans-Henning

(56) Entgegenhaltungen:
- EP-A- 0 608 822
- WO-A-88/06559
- WO-A-92/22065
- WO-A-93/01598
- DE-A- 4 210 826
- DE-U- 9 201 879
- DE-U- 9 312 288
- US-A- 4 793 479

## Beschreibung

Die Erfindung betrifft einen Aufnahmebehälter für Compact-Discs, der mindestens eine Oberschale und mindestens eine Unterschale aufweist, mit einer Halterung, die mit Klemmelementen zur Fixierung der Compact-Discs im Bereich einer Mittelaussparung versehen ist und bei der sich die Klemmelemente mit Vertikalstegen im wesentlichen senkrecht zu einer Auflagefläche einer Halterungsplatte für die Compact-Discs erheben und entlang eines Umfanges einer Zentralausnehmung der Auflagefläche angeordnet sind und bei der in radialer Richtung ausgehend von einem Halterungsmittelpunkt hinter mindestens einem der Klemmelemente eine Ausnehmung angeordnet ist, die sich in Umfangsrichtung entlang mindestens eines Teiles einer rückwärtigen Begrenzung des Klemmelementes erstreckt.

Derartige Halterungen für Compact-Discs sind in vielfältigen Ausführungsformen verfügbar. Es sind Aufnahmebehälter mit derartigen Halterungen bekannt, die je nach Anwendungsfall zur Fixierung von einer, zwei oder drei Compact-Discs ausgestattet werden können. Die Fixierung der Compact-Discs erfolgt durch die meisten Halterungen im Bereich einer Mittelaussparung der Compact-Discs. Bekannt ist es aber ebenfalls, eine seitliche Klemmung im Bereich eines Randes der Compact-Discs vorzunehmen. Bei einer Fixierung im Bereich der Mittelaussparung werde Klemmelemente verwendet, die entlang des Umfanges der Zentralausnehmung der Auflagefläche angeordnet sind und die bei einem Aufschieben der Compact-Disc federnd in Richtung eines Mittelpunktes der Zentralausnehmung ausgelenkt werden und anschließend zur Fixierung der Compact-Disc wieder zurückfedern.

Die Halterung für die Compact-Discs werden in der Regel im Spritzgußverfahren aus Kunststoff hergestellt. Zur Ermöglichung einer relativ einfachen und damit preiswerten Gestaltung von Formen für die Spritzgußprodukte müssen Hinterschneidungen vermieden werden. Dies führt dazu, daß die Klemmung der Compact-Disc im Bereich der Halterungen im wesentlichen durch radial wirkende Kräfte erfolgt. Hieraus resultieren Nachteile insbesondere bei einer längerfristigen Benutzung der Halterungen, da bei häufiger Benutzung Materialermüdungen auftreten und die federnde Elastizität des Halterungsmaterials nachläßt. Mit zunehmender Benutzungsdauer werden deshalb die Compact-Discs zunehmend schwächer festgeklemmt.

In der US 52 44 085 wird bereits eine Halterung für Compact-Discs beschrieben, bei der entlang einer Mittelaussparung einer Halterungsplatte Klemmelemente zur Fixierung der Compact-Disc angeordnet sind. Die Klemmelemente bestehen aus Vertikalstegen sowie Tragkörpern. Der Mittelaussparung abgewandt angeordnet sind hinter den Klemmelementen Aussparungen vorgesehen. Die Halterungsplatte weist einen äußeren Verstärkungsring auf, der über Halterungsstege mit einem inneren Tragring verbunden ist. Ausgehend vom inneren Tragring erstrecken sich die Tragkörper der Klemmelemente in eine einem Mittelpunkt abgewandte Richtung. Die Tragstege verlaufen hierdurch an den Vertikalelementen mit einem Abstand vorbei.

In der US 52 51 750 werden Klemmelemente zur Halterung von Compact-Discs im Bereich einer Tragplatte beschrieben, die schwenkfähig über Gelenke mit einem Mittelteil verbunden sind. Die Klemmelemente erstrecken sich ebenfalls ausgehend von einem inneren Tragring in Ausnehmungen hinein. Die Klemmelemente sind von einem äußeren Versteifungsring der Tragplatte umgeben.

Aus der US 47 93 479 ist eine Halterung für Compact-Discs bekannt, bei der ebenfalls wieder Tragstege vorgesehen sind, die sich ausgehend von der Halterungsplatte zur Begrenzung von Ausnehmungen an den Klemmelementen vorbei erstrecken und im Bereich eines Mittelteiles enden, das die Klemmelemente trägt.

In der EP-A-0 608 822 wird eine Vorrichtung zur Halterung von Compact-Discs beschrieben, bei der eine Halterungsplatte vorgesehen ist, die von einer Oberschale und einer Unterschale umschlossen wird. Die Halterungsplatte weist Klemmelemente für die Compact-Discs auf, die entlang einer Ausnehmung der Halterungsplatte angeordnet sind.

Die Klemmelemente bestehen aus Vertikalstegen sowie in die Ausnehmung hineinragenden Zungen.

In der WO-A-88 06559 wird eine Vorrichtung zur Halterung von Compact-Discs beschrieben, bei der ebenfalls Klemmelemente entlang des Umfangs einer Zentralausnehmung einer Halterungsplatte angeordnet sind. Gemäß einer weiteren Ausführungsform in dieser Druckschrift sind eine Vielzahl von Klemmelementen im Bereich einer Mittelkonsole angeordnet und überkragen in einem Bereich ihrer Ausdehnung Durchbrüche in dieser Mittelkonsole. Die Mittelkonsole wird über eine verrippte Struktur der Halterungsplatte mechanisch stabilisiert.

Aufgabe der vorliegenden Erfindung ist es, eine Halterung der einleitend genannten Art derart zu konstruieren, daß eine verbesserte Fixierungsmöglichkeit für die Compact-Discs bereitgestellt wird.

Diese Aufgabe wird erfindungsgemäß dadurch gelöst, daß das Klemmelement mindestens eine die Ausnehmung mindestens bereichsweise überkragende Rastnase aufweist, die im Bereich eines Endes des Vertikalstegs angeordnet ist, daß sich die Halterungsplatte seitlich bis in einen neben den Vertikalstegen angeordneten Bereich erstreckt und daß durch die seitliche Anordnung der Halterungsplatte relativ zu den Vertikalstegen eine Überleitung der Vertikalstege in die Halterungsplatte ausgebildet ist.

Durch die Anordnung der Ausnehmungen hinter den Klemmelementen ist es möglich, bei einer Durchführung eines Spritzgußvorganges zur Herstellung der Halterung Formteile durch die Ausnehmungen hindurchragenzulassen und eine Trennebene zwischen zwei Formhälften versetzt zu einer von der Zentralausnehmung aufgespannten Bezugsfläche anzuordnen. Es läßt sich hierdurch die die Ausnehmung bereichsweise überkragende Rastnase ausbilden, die zu einer verbesserten Fixierung der Compact-Disc beiträgt. Die Compact-Disc wird hierdurch von der Halterung nicht lediglich festgeklemmt, sondern es erfolgt eine mechanische Verriegelung. Die Dimensionierung der Rastnase erfolgt in Abhängigkeit von vorgebbaren Lösekräften, die zu einer Trennung der Compact-Disc von der Halterung erforderlich sein sollen. Hier besteht ein sehr großer Gestaltungsspielraum, der in Abhängigkeit von jeweiligen Anwendungsanforderungen genutzt werden kann.

Eine mechanische Verriegelung einer fixierten Compact-Disc wird dadurch bereitgestellt, daß die Rastnase absatzartig in einen Vertikalsteg des Klemmelementes übergeleitet ist.

Zur Erleichterung einer Entnahme einer fixierten Compact-Disc ist es auch möglich, daß die Rastnase gerundet in einen Vertikalsteg des Klemmelementes übergeleitet ist.

Eine weitere Ausführungsform besteht darin, daß die Rastnase von einer Rampe in einen Vertikalsteg des Klemmelementes übergeleitet ist und daß die Rampe eine Begrenzungsfläche aufweist, die sich im wesentlichen schräg zum Vertikalsteg erstreckt.

Eine Zentrierung der Compact-Disc vor einer Fixierung wird dadurch unterstützt, daß mindestens eines der Klemmelemente einen Radialsteg aufweist, der sich ausgehend vom Vertikalsteg in Richtung auf den Halterungsmittelpunkt erstreckt.

Für eine Halterung von zwei Compact-Discs ist es vorteilhaft, daß entlang des Umfanges der Zentralausnehmung die Radialstege abwechselnd im Bereich einander abgewandter Enden der Vertikalstege angeordnet sind.

Zur Fixierung einer einzelnen Compact-Disc ist es ausreichend, daß sich die Vertikal stege ausgehend von einer Halterungsplatte einseitig über eine der Auflageflächen der Halterungsplatte erheben.

Zur Fixierung von zwei Compact-Discs im Bereich von einander abgewandter Begrenzungsflächen einer Halterungsplatte hat es sich als vorteilhaft erwiesen, daß sich die Vertikalstege in einander abgewandte Richtungen über beide die Halterungsplatte begrenzenden Auflageflächen erheben.

Eine Rastnase relativ großer Erstreckung in Umfangsrichtung kann dadurch ausgebildet werden, daß sich die Ausnehmung in Umfangsrichtung über die volle Breite des Klemmelementes erstreckt.

Ein Aufsetzen einer Compact-Disc auf die Klemmelemente kann dadurch unterstützt werden, daß sich die Ausnehmung und die Rastnase in Umfangsrichtung über einen Teilbereich des Klemmelementes erstrecken und im wesentlichen symmetrisch zu einer Mittellinie des Klemmelementes angeordnet sind.

Eine erhöhte Nachgiebigkeit bei einem Aufsetzen der Compact-Disc kann dadurch hervorgerufen werden, daß mindestens einem Klemmelement mindestens zwei Ausnehmungen zugeordnet sind, die durch einen Verbindungssteg voneinander getrennt sind.

Ein weiterer Freiheitsgrad bei der Gestaltung besteht darin, daß die Ausnehmungen unsymmetrisch zur Mittellinie angeordnet sind.

Zur Bereitstellung günstiger Kraftverläufe innerhalb des Materials wird vorgeschlagen, daß sich die Ausnehmung in eine dem Klemmelement abgewandte Richtung verjüngt.

In der Zeichnung sind Ausführungsbeispiele der Erfindung schematisch dargestellt. Es zeigen:
- Fig. 1: eine Draufsicht auf eine teilweise Darstellung einer Halterung mit hakenförmig ausgebildeten Klemmelementen, die mit abwechselnden Orientierungen angeordnet sind,
- Fig. 2: einen Querschnitt gemäß Schnittlinie II-II in Fig. 1,
- Fig. 3: eine vergrößerte Darstellung der Einzelheit III in Fig. II,
- Fig. 4: eine gegenüber Fig. III verschobene Schnittdarstellung derart, daß das hakenförmige Klemmelement in einer Seitenansicht dargestellt ist,
- Fig. 5: eine Ansicht des Klemmelementes gemäß Blickrichtung V in Fig. IV,
- Fig. 6: eine Draufsicht auf ein Klemmelement mit gegenüber Fig. 1 veränderter Gestaltung der Ausnehmung,
- Fig. 7: eine Ausführungsform mit zwei Ausnehmungen je Klemmelement,
- Fig. 8: eine Ausführungsform mit einer bezüglich einer Mittellinie des Klemmelementes unsymmetrisch angeordneten Ausnehmung,
- Fig. 9: eine Seitenansicht eines Klemmelementes mit gerundeter Rastnase,
- Fig. 10: eine weitere Variante des Klemmelementes,
- Fig. 11: eine Draufsicht auf eine als Tray ausgebildete Halterung,
- Fig. 12: einen Vertikalschnitt durch eine Halterung, die in einen Aufnahmebehälter einsetzbar ist, in einem auseinandergenommenen Zustand von Oberschale, Unterschale und Tray,
- Fig. 13: eine Prinzipdarstellung von alternierend angeordneten Vertikalstegen zur Ausbildung der Klemmelemente für eine Halterung von zwei Compact-Discs im Bereich von einander abgewandten Seiten eines Trays,
- Fig. 14: eine gegenüber Fig. 13 modifizierte Darstellung mit unterschiedlichen Längen der Vertikalstege,
- Fig. 15: eine weitere abgewandelte Darstellung bei einer Verwendung von hakenförmigen Klemmelementen mit alternierenden Orientierungen,
- Fig. 16: eine weitere Variante der Ausbildung der Klemmelemente zur Fixierung von zwei Compact-Discs
und
- Fig. 17: eine weitere Variante bei Verwendung von alternierend angeordneten hakenförmigen Klemmelementen.

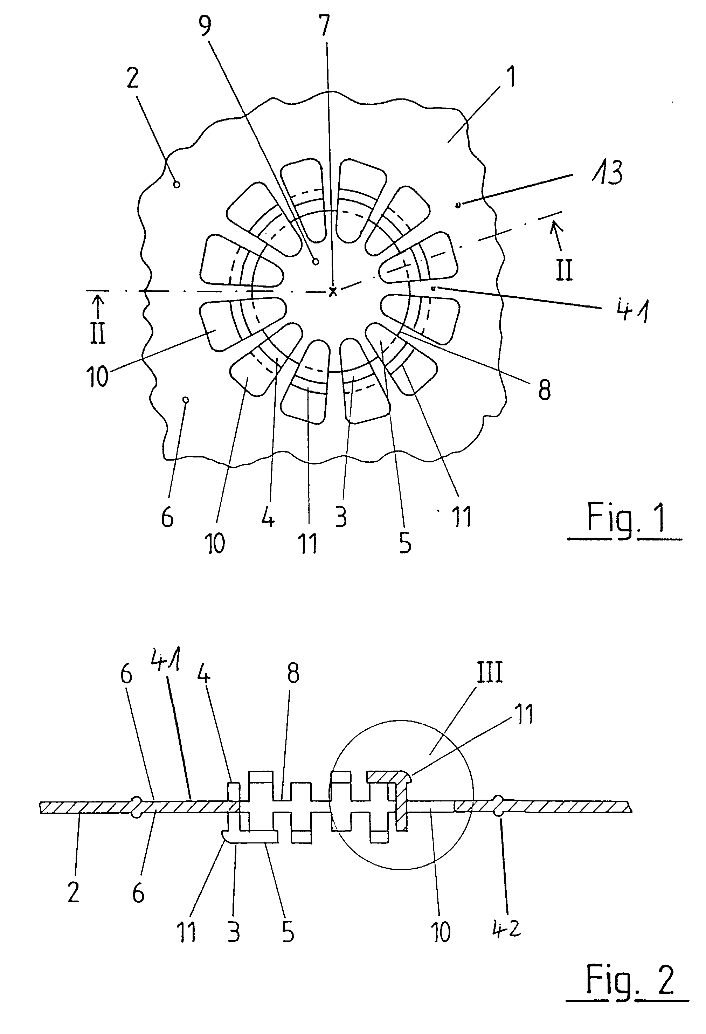

Entsprechend Fig. 1 ist eine Halterung (1) für Compact-Discs als ein Tray (2) ausgebildet, das mit Klemmelementen (3) versehen ist. Gemäß der Ausführungsform in Fig. 1 bestehen die Klemmelemente (3) aus Vertikalstegen (4) sowie aus Radialstegen (5). Die Vertikalstege (4) erheben sich im wesentlichen senkrecht über eine von einer Auflagefläche (6) des Trays (2) aufgespannte Ebene. Die Radialstege (5) erstrecken sich ausgehend von Enden der Vertikalstege (4) radial in Richtung auf einen Halterungsmittelpunkt (7). Die Klemmelemente (3) sind entlang eines Umfanges (8) einer Zentralausnehmung (9) der Auflagefläche (6) angeordnet.

Ausgehend vom Halterungsmittelpunkt (7) hinter den Klemmelementen (3) sind Ausnehmungen (10) als Durchbrüche in der Auflagefläche (6) angeordnet.

Bei einer Ausbildung der Halterung (1) zur Fixierung einer einzelnen Compact-Disc ist es ausreichend, wenn sich die Vertikalstege (4) lediglich im Bereich einer der Oberflächen des Trays (2) erheben. Ist hingegen vorgesehen, im Bereich beider Auflageflächen (6) des Trays (2) Compact-Discs zu halten, so kann entsprechend der Darstellung in Fig. 2 vorgesehen sein, daß sich die Vertikalstege (4) über beide Auflageflächen (6) erheben.

Zur Gewährleistung einer ausreichenden Entformbarkeit bei einer Herstellung im Spritzgußverfahren sind die Radialstege (5) alternierend jeweils im Bereich der einander abgewandten Enden der Vertikalstege (5) angeordnet. Entlang des Umfanges (8) sind im Bereich einer der Auflageflächen (6) somit Enden der Vertikalstege (4) angeordnet, die abwechselnd mit einem Radialsteg (5) beziehungsweise ohne einen Radialstege (5) ausgebildet sind. Die Bereiche der Vertikalstege (4), die den Radialstegen (5) abgewandt sind, können ebenfalls zur klemmenden Fixierung von Compact-Discs verwendet werden. Grundsätzlich ist es aber ebenfalls denkbar, eine Fixierung nur im Bereich derjenigen Enden der Vertikalstege (4) vorzunehmen, die mit den Radialstegen (5) versehen sind.

Die Vertikalstege (4) sind im Bereich eines ihrer Enden mit Rastnasen (11) versehen. Gemäß der Ausführungsform in Fig. 2 sind die Rastnasen (11) jeweils als Verlängerung der Radialstege derart angeordnet, daß die Rastnasen (11) die Ausnehmungen (10) überkragen. Hierdurch wird ein Einrastmechanismus für zu fixierende Compact-Discs bereitgestellt.

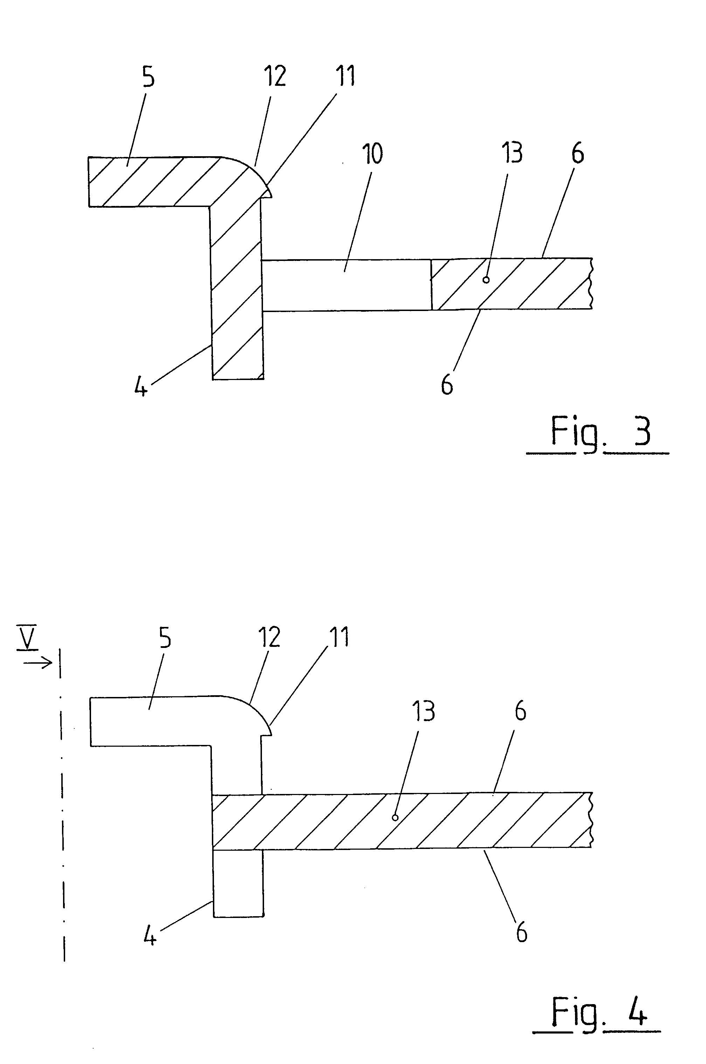

Aus der vergrößerten Darstellung in Fig. 3 ist erkennbar, daß gemäß einer Ausführungsform der Rastnase (11) vorgesehen ist, eine absatzartige Überleitung der Rastnase (11) in den Bereich des Vertikalsteges (4) vorzunehmen. Im Bereich der Überleitung der Rastnase (11) in den Radialsteg (5) ist eine gerundete kontinuierliche Überleitung (12) vorgesehen. Dies erleichtert bei einem Aufsetzen einer zu fixierenden Compact-Disc die erforderliche Zentrierung.

Fig. 4 zeigt in einer gegenüber der Darstellung in Fig. 3 verschobenen Schnittfläche, daß sich eine Halterungsplatte (13) des Trays (2), die von den Auflageflächen (6) begrenzt ist, bis in einen Bereich seitlich neben den Vertikalstegen (4) erstreckt. Hierdurch wird eine ausreichende Stabilität im Bereich einer Überleitung der Vertikalstege (4) in die Halterungsplatte (13) gewährleistet.

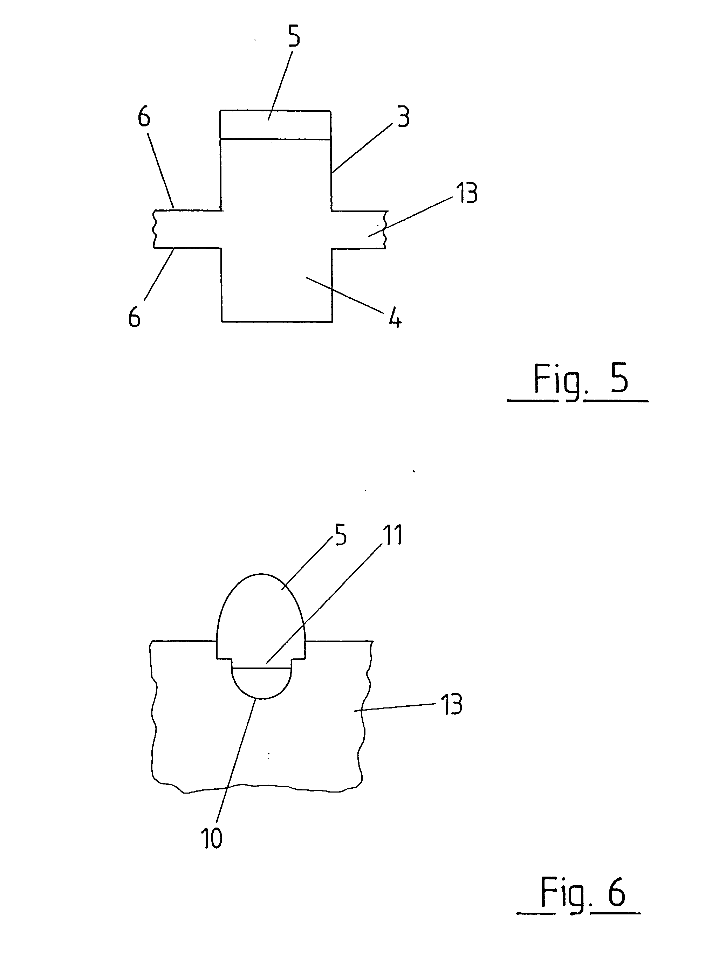

Fig. 5 zeigt das Klemmelement (3) gemäß Fig. 4 aus einer Blickrichtung V in Fig. 4. Auch aus dieser Darstellung ergibt sich die Überleitung des Klemmelementes (3) in die Halterungsplatte (13).

Aus der Draufsicht auf das Klemmelement (3) in Fig. 6 ist erkennbar, daß gegenüber der Darstellung in Fig. 1 modifizierte Formgebungen für die Ausnehmungen (10) möglich sind. Gemäß Fig. 6 ist eine gegenüber Fig. 4 (1) kleinere Ausnehmung (10) vorgesehen. In radialer Richtung ist grundsätzlich eine Dimensionierung der Ausnehmung (10) in einer Ausführung ausreichend, daß eine Formung der Rastnase (11) gewährleistet ist. In Umfangsrichtung ist gemäß Fig. 6 vorgesehen, daß sich die Ausnehmung (10) nur über einen Teil der Ausdehnung des Klemmelementes (3) erstreckt. Die Ausnehmung (10) ist hierbei relativ zum Klemmelement (3) derart angeordnet, daß bei einer rückwärtigen Ansicht des Vertikalsteges (4) jeweils neben der Rastnase (11) ein rastnasenfreier Bereich des Vertikalsteges (4) angeordnet ist.

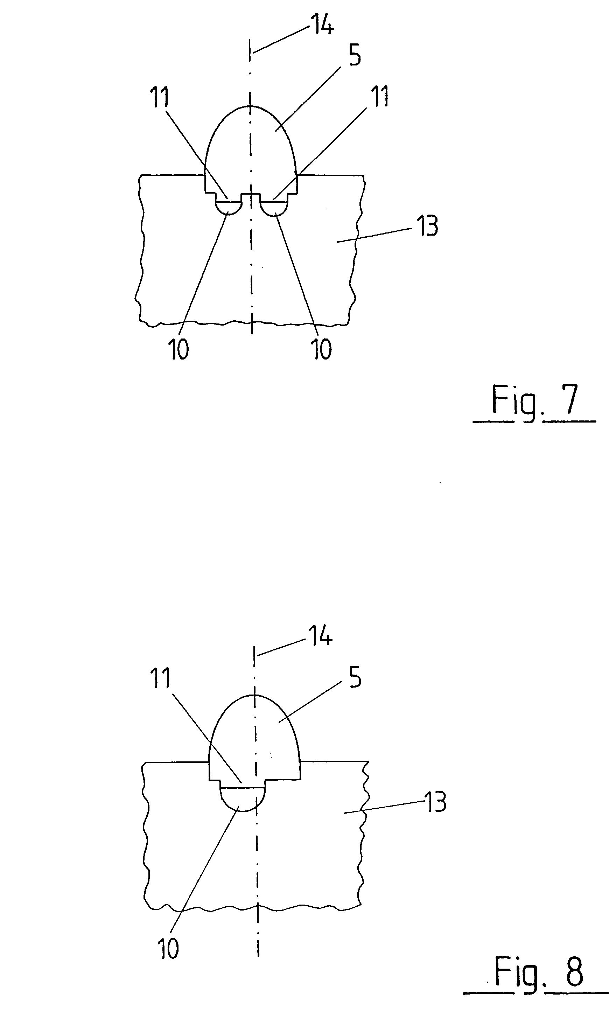

Gemäß Fig. 7 sind dem Klemmelement (3) zwei Ausnehmungen (10) zugeordnet, die mit einem Abstand symmetrisch zu einer Mittellinie des Klemmelementes (3) angeordnet s ind. Hierdurch werden zwei Rastnasen (11) im Bereich des Klemmelementes (3) ausgebildet.

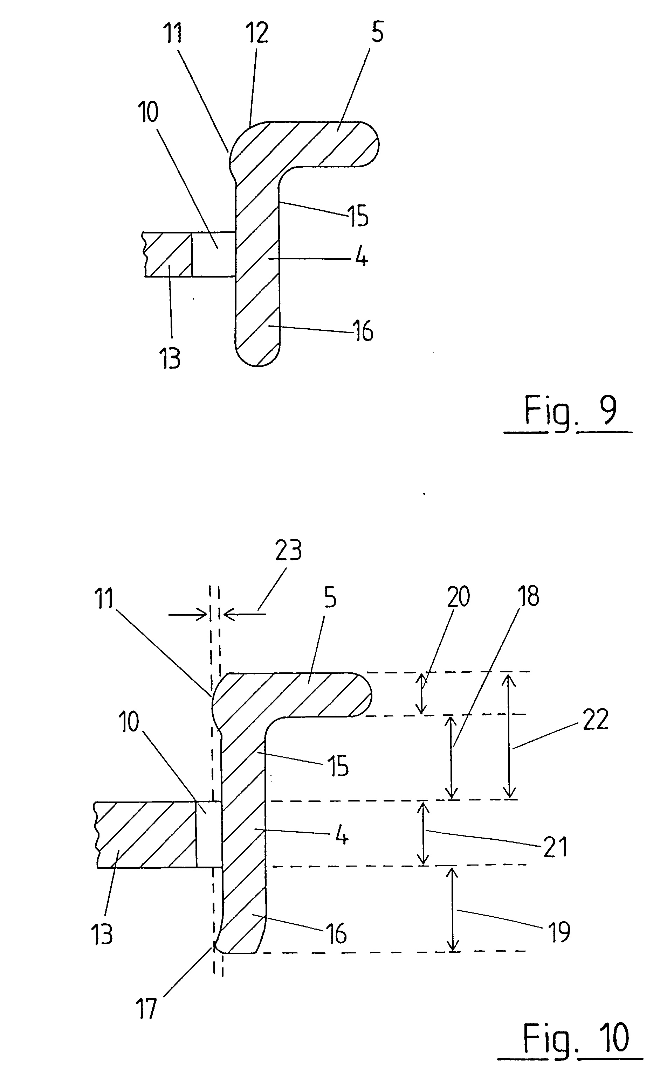

Fig. 8 zeigt eine bezüglich der Mittellinie (14) unsymmetrische Anordnung der Ausnehmung (10).

Fig. 9 zeigt eine Ausführungsform des Klemmelementes (3) mit gerundet konturierter Rastnase (11). Bei dieser Ausführungsform ist nicht nur die Überleitung (12) gerundet konturiert, sondern es ist ebenfalls ein annähernd kontinuierlicher Übergang von der Überleitung (12) in den Bereich der Rückseite des Vertikalsteges (4) vorgesehen. Eine derartige Ausführungsform erleichtert ein Abziehen der im Bereich der Halterung (1) fixierten Compact-Discs vom Tray (2).

Fig. 10 zeigt eine Ausführungsform des Klemmelementes (3), bei der der Vertikalsteg (4) sich ebenfalls im Bereich von zwei Halterungssegmenten (15,16) über die Auflageflächen (6) zur Halterung von zwei Compact-Discs erhebt. Die Rastnase (11) im Bereich des Radialsteges (5) ist gerundet konturiert. Zusätzlich ist im Bereich des dem Radialsteg (5) abgewandten Halterungssegmentes (16) ein weiteres Rastelement (17) angeordnet. Dieses Rastelement (17) kann dadurch erzeugt werden, daß zunächst Klemmelemente (3) entsprechend Fig. 9 spritzgegossen werden und anschließend nach einer Entformung eine thermoplastische radiale Aufweitung der Halterungssegmente (15,16) nach außen erfolgt, so daß eine dauerhafte Umbiegung zur Bereitstellung der Rastelemente (17) erfolgt.

Die Segmentlängen (18,19) der Halterungssegmente (15,16) können einander entsprechend gewählt werden. Die Radialstege (5) sind mit einer Stegdicke (20) und die Halterungsplatte (13) ist mit einer Plattendicke (21) versehen. Die Stegdicke (20) und die Segmentlänge (18) ergeben zusammen eine Bauhöhe (22). Durch die Rastnasen (11) und die Rastelemente (17) wird eine Rastprofilierung und einer Rasttiefe (23) ausgebildet.

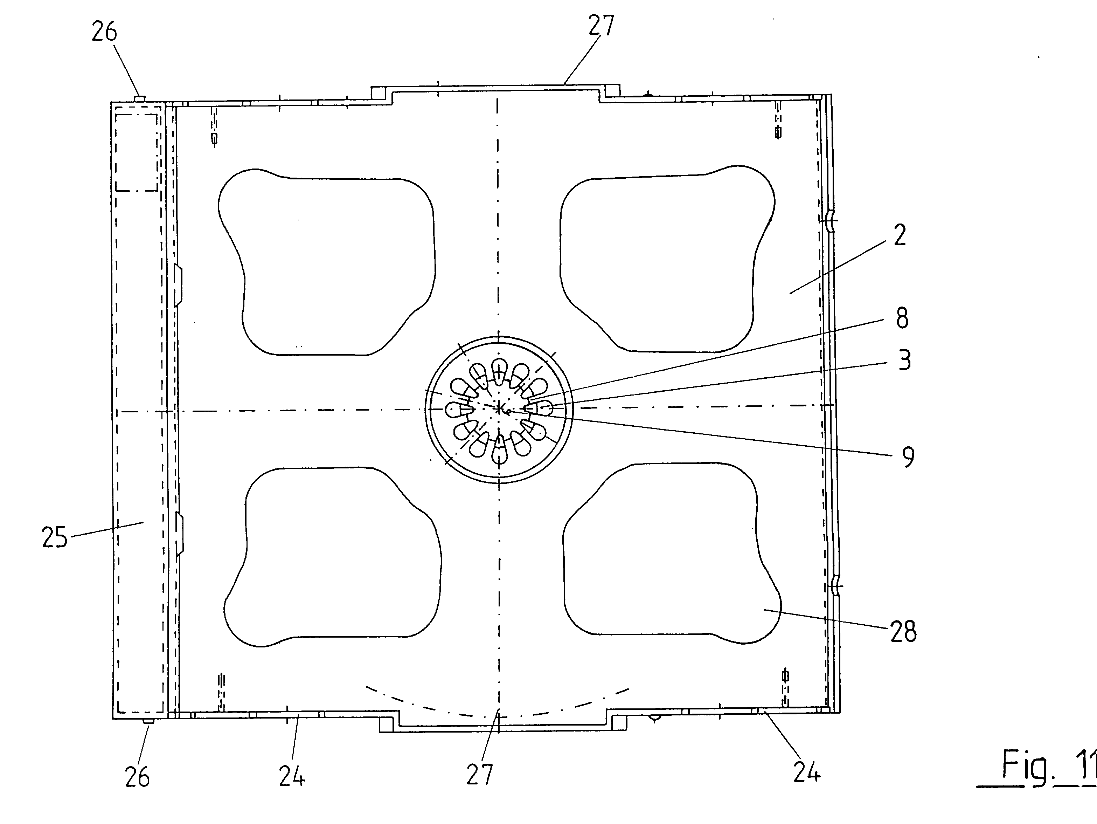

Fig. 11 zeigt eine Draufsicht auf das Tray (2), das mit den Klemmelementen (3) versehen ist. Die Klemmelemente (3) sind entlang des Umfanges (8) der Zentralausnehmung (9) angeordnet. Zur Versteifung ist ist das Tray (2) von einem Rand (24) umgeben. Als Abschluß weist das Tray (2) im Bereich einer seiner Seiten eine Verbindungskonsole (25). Die Verbindungskonsole (25) trägt Zapfen (26), die für eine verschwenkbare Anordnung des Trays (2) dienen. Seitlich kann das Tray (2) mit Vorsprüngen (27) versehen sein, bei einer entsprechenden Dimensionierungsanpassung an den Durchmesser einer zu halternden Compact Disc sind aber auch andere Ausführungsformen denkbar. Eine Gewichtsreduzierung kann über Trayaussparungen (28) erfolgen.

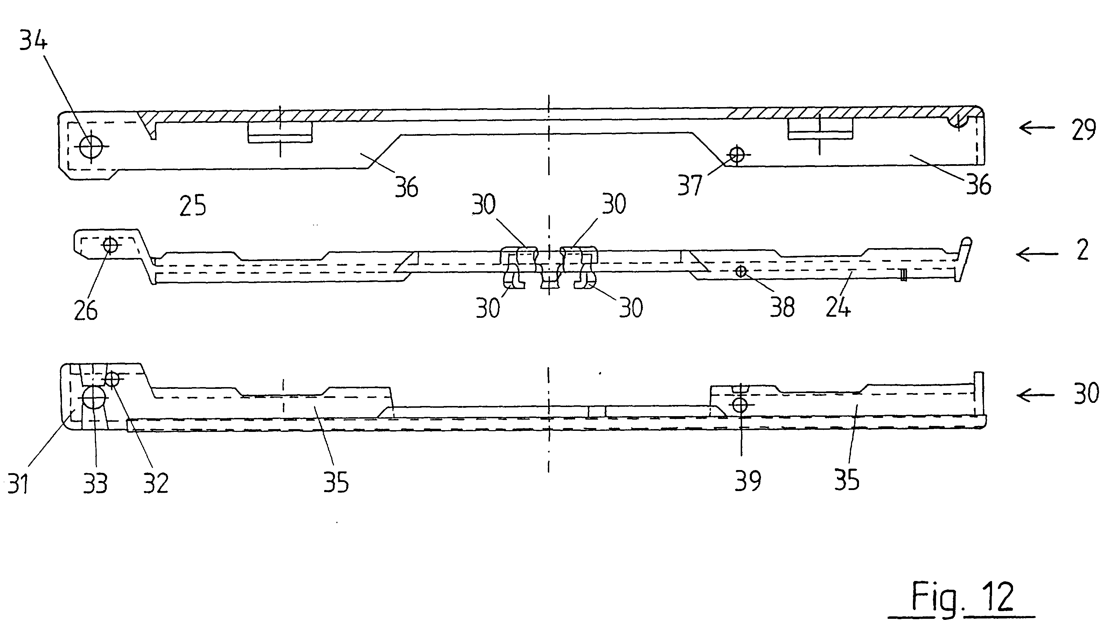

Fig. 12 zeigt die Zuordnung des Trays (2) zu einer Oberschale (29) und einer Unterschale (30), die gemeinsam ein Gehäuse für das Tray (2) ausbilden. Die Unterschale (30) weist im Bereich einer Randkonsole (31) Ausnehmungen (32) zur Aufnahme der Zapfen (26) auf. Darüber hinaus sind Ausnehmungen (33) zur Aufnahme von Hauptzapfen (34) vorgesehen, die im Bereich der Oberschale (29) angeordnet sind und zur verschwenkbaren Verbindung der Oberschale (29) mit der Unterschale (30) dienen. Die Unterschale (30) weist einen Rand (35) auf und die Oberschale (29) ist mit einem Rand (36) versehen.

Zur Ermöglichung einer Fixierung von Tray (2), Oberschale (29) und Unterschale (30) relativ zueinander sind Rastelemente (37,38,39) vorgesehen. Die Rastelemente (37,38,39) können als angepaßt zueinander ausgebildete Verdickungen und Mulden im Bereich der Ränder (24,35,36) ausgebildet sein.

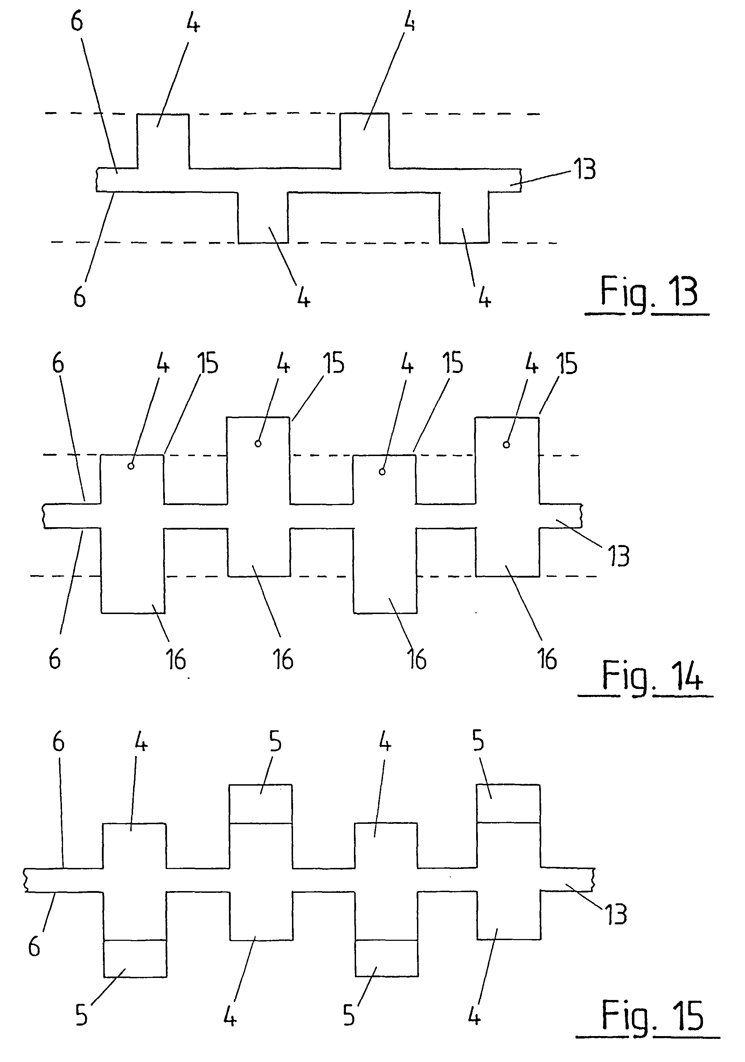

Fig. 13 zeigt eine Variante zur Ausbildung der Klemmelemente (3) bei einer Konstruktion des Trays (2) zur beidseitigen Halterung von Compact Discs. Es ist schematisch die Anordnung der Klemmelemente (3) entlang des Umfangs (8) der Zentralsausnehmung (9) dargestellt. Gemäß Fig. 13 erstrecken sich abwechselnd in einander abgewandte Richtungen Vertikalstege (4), die ohne Radialstege (5) ausgebildet sind. Die Vertikalstege (4) weisen eine zur Fixierung der Compact Discs ausreichende Höhe auf.

Gemäß der Ausführungsform in Fig. 14 erstrecken sich jeweils ausgehend von der Halterungsplatte (13) am gleichen Einbauort Vertikalstege (4) mit Halterungssegmenten (15,16) in einander abgewandte Richtungen. Die Halterungssegmente (15) sind jedoch alternierend mit unterschiedlichen Längen ausgebildet.

Die Ausführungsform gemäß Fig. 15 ist ähnlich zur Ausführungsform gemäß Fig. 14. Im Bereich der jeweils längeren Halterungssegmente (15,16) sind jedoch zusätzlich Radialstege (5) angeordnet.

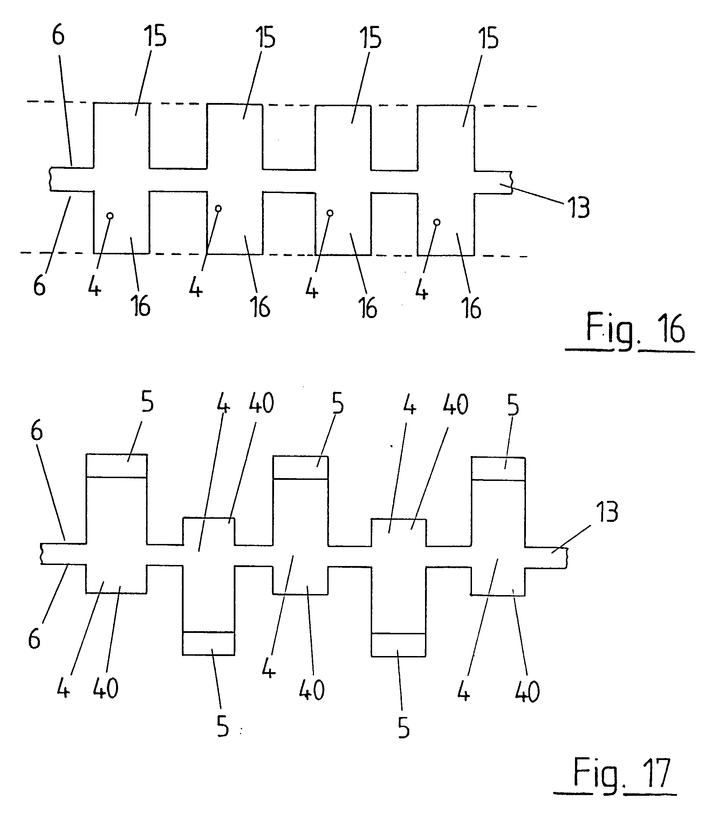

Fig. 16 zeigt eine Ausführungsform ähnlich zu Fig. 14, jedoch sind hier die Halterungssegmente (15,16) mit im wesentlichen gleichen Längen versehen.

Fig. 17 zeigt eine Abwandlung der Ausführungsform gemäß Fig. 15. Im Bereich der den Radialstegen (5) abgewandten Enden der Vertikalstege (4) sind hier jedoch lediglich Rumpfsegmente (40) angeordnet, die allenfalls geringe Klemmkräfte auf die zu fixierenden Compact Discs aufbringen und im wesentlichen eine Zentrierung der Compact Disc unterstützen.

Eine Konstruktion gemäß der US 5 244 085, bei der die Vertikal stege eine leichte Neigung aufweisen und bei der ein äußerer Versteifungsring über Halterungstege mit einem inneren Tragring für die Klemmelemente verbunden ist, führt insbesondere bei maschinellen Verpackungen von Compactdiscs zu hohen Ausschußraten, da die sternförmige Gestaltung nachfedert und zu einem Ausbrechen neigt. Insbesondere die relativ langen Halterungsstege neigen im Bereich ihrer Überleitungen in den äußeren sowie den inneren Ring zu Brüchen. Darüber hinaus führt auch die über den gesamten Bereich der Erstreckung geneigte Anordnung der Vertikalsegmente zu relativ hohen Kräften bei einem Aufsetzen der Compaktdiscs, so daß die Bruchanfälligkeit noch vergrößert wird.

Erfindungsgemäß ist es hingegen vorgesehen, statt der Vertikalstege (4) mit leichter Neigung eine tatsächlich im wesentlichen senkrechte Anordnung vorzusehen und lediglich zusätzlich Rastnasen (11) derart anzuordnen, daß diese die Ausnehmungen (10) teilweise überkragen. Es wird hierdurch lediglich kurzzeitig eine genau definierte Kraft bei einem Aufschieben der Compaktdisc erzeugt. Da der Zeitpunkt des Auftretens dieser Kraft exakt definiert von der Positionierung der Compaktdisc relativ zu den Klemmelementen (3) abhängig ist, kann in einfacher Weise eine Abstützung zum Auffangen der Kräfte erfolgen.

Zusätzlich zu dieser Verbesserung der Krafteinleitung werden die Ausnehmungen (10) aber auch derart angeordnet, daß die gemäß der US 52 44 085 vorgesehenen langen Halterungsstege entfallen. Erfindungsgemäß wurde erkannt, daß es beispielsweise ausgehend von Fig. 18 der US 52 44 085 lediglich erforderlich ist, die Halterungsstege bis in den Bereich der Vertikalstege (4) der Klemmelemente (3) verlaufen zu lassen und hier direkt eine Überleitung in die Vertikalstege (4) vorzunehmen. Die auftretenden Hebelarme werden hierdurch wesentlich verkürzt, so daß eine verbesserte Kraftbeständigkeit vorgesehen ist.

Insbesondere ist es auch nicht erforderlich, die gemäß der US 52 44 085 vorgesehenen dicken Ausbildungen des äußeren Ringes sowie der Halterungsstege vorzunehmen. Insbesondere aus Fig. 19 der US 52 44 085 ist erkennbar, daß die Halterungsringe und die Halterungsstege nahezu die dreifache Dicke wie die Halterungsplatte aufweisen. Gemäß der vorliegenden Erfindung ist es hingegen bei Verwendung üblicher Bestückungsautomaten ausreichend, die Bereiche der Halterungsplatte (13), die stegartig seitlich die Ausnehmungen (10) begrenzen und die Klemmelemente (3) haltern, mit etwa der gleichen Dicke wie die Halterungsplatte (13) auszubilden.

Die Möglichkeit zur Verwendung geringer dimensionierter Halterungsstege sowie die Vermeidung zusätzlicher Bauteile im zentralen Bereich der Mittelaussparung führt darüber hinaus zu einer Materialeinsparung, die bei den in sehr großen Produktionszahlen hergestellten CD-Verpackungen erhebliche Kostenvorteile zur Folge hat.

Die konstruktiven Merkmale der Überleitung der Halterungsplatte (13) entlang der Ausnehmungen (10) in die Klemmelemente (3) wird nachfolgend unter Bezugnahme auf Fig. 1 und Fig. 2 nochmals verdeutlicht. Aus Fig. 1 ist erkennbar, daß ein an die Ausnehmungen (10) angrenzender äußerer Bereich der Halterungsplatte (13) von Halterungsstegen (41) in die Klemmelemente (3) übergeleitet ist. In Richtung auf die Halterungsplatte (13) sind die Ausnehmungen (10) in Eckbereichen bevorzugt gerundet begrenzt, so daß eine kontinuierliche Überleitung in die Halterungsstege (41) erfolgt. In Richtung auf die Vertikalstege (4) verlaufen die Halterungsstege (41) vorzugsweise mit abnehmender Breite gemessen in Umfangsrichtung der Zentralausnehmung (9), es ist aber ebenfalls möglich, eine näherungsweise konstante Breite zu realisieren.

Ausgehend von der Halterungsplatte (13) in Richtung auf die Zentralausnehmung (9) erstrecken sich die Halterungsstege (41) bis in den Bereich einer der Zentralausnehmung (9) zugewandten Innenfläche der Vertikalstege (4). Im Bereich unterhalb der Rastnasen (11) weisen die Halterungsstege (41) einen Abstand zueinander auf, der mindestens der Ausdehnung der Rastnasen (11) in Umfangsrichtung der Zentralausnehmung (9) entspricht.

Gemäß Fig. 2 ist insbesondere daran gedacht, den Bereich der Halterungsstege (41), der sich neben den Vertikalstegen (4) erstreckt, gerundet in die Vertikalstege (4) überzuleiten, um günstige Kraftverläufe zu erreichen.

Zur Erhöhung der Festigkeit kann gemäß Fig. 2 ein umlaufender Verstärkungsring (42) vorgesehen sein. Die Ausnehmungen (10) verlaufen vorzugsweise ausgehend von der Halterungsplatte (13) in Richtung auf die Zentralausnehmung (7) sich verjüngend. Insbesondere ist auch daran gedacht, bei einer Draufsicht entsprechend Fig. 1 eine Konturfortsetzung der seitlichen Begrenzungen der Ausnehmungen (10) in die seitlichen Begrenzungen der Radialstege (5), allerdings auf relativ zueinander versetzten Ebenen, vorzusehen.

## Patentansprüche

1. Aufnahmebehälter für Compact-Discs, der mindestens eine Oberschale und mindestens eine Unterschale aufweist, mit einer Halterung, die mit Klemmelementen zur Fixierung der Compact-Discs im Bereich einer Mittelaussparung versehen ist und bei der sich die Klemmelemente mit Vertikalstegen im wesentlichen senkrecht zu einer Auflagefläche einer Halterungsplatte für die Compact-Discs erheben und entlang eines Umfanges einer Zentralausnehmung der Auflagefläche angeordnet sind und bei der in radialer Richtung ausgehend von einem Halterungsmittelpunkt hinter mindestens einem der Klemmelemente eine Ausnehmung angeordnet ist, die sich in Umfangsrichtung entlang mindestens eines Teiles einer rückwärtigen Begrenzung des Klemmelementes erstreckt, dadurch gekennzeichnet, daß das Klemmelement mindestens eine die Ausnehmung (10) mindestens bereichsweise überkragende Rastnase (11) aufweist, die im Bereich eines Endes des Vertikalstegs (4) angeordnet ist, daß sich die Halterungsplatte (13) seitlich bis in einen neben den Vertikalstegen (4) angeordneten Bereich erstreckt und daß durch die seitliche Anordnung der Halterungsplatte (13) relativ zu den Vertikalstegen (4) eine Überleitung der Vertikalstege (4) in die Halterungsplatte ausgebildet ist.

2. Aufnahmebehälter nach Anspruch 1, dadurch gekennzeichnet, daß die Rastnase absatzartig in einen Vertikalsteg (4) des Klemmelementes (3) übergeleitet ist.

3. Aufnahmebehälter nach Anspruch 1, dadurch gekennzeichnet, daß die Rastnase (11) gerundet in einen Vertikalsteg (4) des Klemmelementes (3) übergeleitet ist.

4. Aufnahmebehälter nach Anspruch 1, dadurch gekennzeichnet, daß die Rastnase (11) von einer Rampe in einen Vertikalsteg (4) des Klemmelementes (3) übergeleitet ist und daß die Rampe eine Begrenzungsfläche aufweist, die sich im wesentlichen schräg zum Vertikalsteg (4) erstreckt.

5. Aufnahmebehälter nach einem der Ansprüche 1 bis 4, dadurch gekennzeichnet, daß mindestens eines der Klemmelemente (4) einen Radialsteg (5) aufweist, der sich ausgehend vom Vertikalsteg (4) in Richtung auf den Halterungsmittelpunkt (7) erstreckt.

6. Aufnahmebehälter nach einem der Ansprüche 1 bis 5, dadurch gekennzeichnet, daß entlang des Umfanges (8) der Zentralausnehmung (9) die Radialstege (5) abwechselnd im Bereich einander abgewandter Enden der Vertikalstege (4) angeordnet sind.

7. Aufnahmebehälter nach einem der Ansprüche 1 bis 6, dadurch gekennzeichnet, daß sich die Vertikalstege (4) ausgehend von einer Halterungsplatte (13) einerseits über eine der Auflageflächen (6) der Halterungsplatte (13) erheben.

8. Aufnahmebehälter nach einem der Ansprüche 1 bis 6, dadurch gekennzeichnet, daß sich die Vertikalstege (4) in einander abgewandte Richtungen über beide die Halterungsplatte (13) begrenzenden Auflageflächen (6) erheben.

9. Aufnahmebehälter nach einem der Ansprüche 1 bis 8, dadurch gekennzeichnet, daß sich die Ausnehmung (10) in Umfangsrichtung über die volle Breite des Klemmelementes (3) erstreckt.

10. Aufnahmebehälter nach einem der Ansprüche 1 bis 8, dadurch gekennzeichnet, daß sich die Ausnehmung (10) und die Rastnase (11) in Umfangsrichtung über einen Teilbereich des Klemmelementes (3) erstrecken und im wesentlichen symmetrisch zu einer Mittellinie (14) des Klemmelementes (3) angeordnet sind.

11. Aufnahmebehälter nach einem der Ansprüche 1 bis 8, dadurch gekennzeichnet, daß mindestens einem Klemmelement (3) mindestens zwei Ausnehmungen (10) zugeordnet sind, die durch einen Verbindungssteg voneinander getrennt sind.

12. Aufnahmebehälter nach einem der Ansprüche 1 bis 11, dadurch gekennzeichnet, daß die Ausnehmungen (10) unsymmetrisch zur Mittellinie (14) angeordnet sind.

13. Aufnahmebehälter nach einem der Ansprüche 1 bis 12, dadurch gekennzeichnet, daß sich die Ausnehmung (10) in eine dem Klemmelement (3) abgewandte Richtung verjüngt.

## Claims

1. A container for compact discs, which comprises at least one top tray and at least one bottom tray, having a holding means which is provided with retaining elements for fixing the compact disc in the region of a central opening and in which the retaining elements project with vertical webs substantially perpendicularly with respect to the supporting surface of a holding plate for the compact discs and are arranged around the circumference of a central opening in the supporting surface and in which, proceeding radially outwards from the centre point of the holding means, a recess is arranged behind at least one of the retaining elements which extends in the circumferential direction along at least part of the rear boundary of the retaining element, characterised in that the retaining element comprises at least one catch projection (11) extending over at least part of the recess (10), which catch projection (11) is arranged in the area of one end of the vertical web (4), in that the holding plate (13) extends laterally into an area arranged adjacent the vertical web (4) and in that the vertical webs (4) are connected with the holding plate through the lateral arrangement of the holding plate (13) relative to the vertical webs (4).

2. A container according to claim 1, characterised in that the catch projection joins a vertical web (4) of the retaining element (3) in the manner of a step.

3. A container according to claim 1, characterised in that the catch projection (11) joins a vertical web (4) of the retaining element (3) in rounded manner.

4. A container according to claim 1, characterised in that the catch projection (11) joins a vertical web (4) of the retaining element (3) in the manner of a ramp and in that the ramp comprises a delimiting surface which extends substantially obliquely relative to the vertical web (4).

5. A container according to any one of claims 1 to 4, characterised in that at least one of the retaining elements (4) comprises a radial web (5) which extends from the vertical web (4) towards the centre point (7) of the holding means.

6. A container according to any one of claims 1 to 5, characterised in that the radial webs (5) are arranged around the circumference (8) of the central opening (9) alternately in the region of mutually opposing ends of the vertical webs (4).

7. A container according to any one of claims 1 to 6, characterised in that on one side the vertical webs (4) project from the holding plate (13) beyond one of the supporting surfaces (6) of the holding plate (13).

8. A container according to any one of claims 1 to 6, characterised in that the vertical webs (4) project in mutually opposing directions beyond the two supporting surfaces delimiting the holding plate (13).

9. A container according to any one of claims 1 to 8, characterised in that in the circumferential direction the recess (10) extends over the whole width of the retaining element (3).

10. A container according to any one of claims 1 to 8, characterised in that in the circumferential direction the recess (10) and the catch projection (11) extend over part of the retaining element (3) and are arranged substantially symmetrically with respect to a centre line (14) of the retaining element (3).

11. A container according to any one of claims 1 to 8, characterised in that at least two recesses (10) are associated with at least one retaining element (3), which recesses (10) are separated from each other by a connecting web.

12. A container according to any one of claims 1 to 11, characterised in that the recesses (10) are arranged symmetrically with respect to the centre line (14).

13. A container according to any one of claims 1 to 12, characterised in that the recess (10) tapers away from the retaining element (3).

## Revendications

1. Boîtier destiné à contenir des disques compacts qui comprend au moins un élément supérieur en cuvette et au moins un élément inférieur en cuvette , boîtier comportant un support qui est muni d'éléments de serrage servant à la fixation des disques compacts dans la zone d'un évidement central, support dans le cas duquel les éléments de serrage se dressent par des nervures verticales essentiellement perpendiculairement à une face d'appui d'une plaque de support pour les disques compacts et sont prévus suivant une périphérie d'une ouverture centrale de la face d'appui, et dans le cas duquel , partant en direction radiale d'un point médian du support à l'arrière d'au moins l'un des éléments de serrage, il a été prévu une ouverture qui s'étend dans le sens périphérique suivant au moins une partie d'une délimitation vers l'arrière de l'élément de serrage, le boîtier destiné à contenir des disques compacts étant caractérisé en ce que l'élément de serrage présente au moins un nez d'arrêt (11) qui surplombe au moins localement l'ouverture (10) , nez d'arrêt (11) qui a été prévu dans la zone d'une extrémité de la nervure verticale (4), en ce que la plaque de support (13) s'étend latéralement jusque dans une zone située à côté des nervures verticales (4) , et en ce que, étant donné la position de la plaque de support (13) par rapport aux nervures latérales (4), les nervures verticales (4) font corps avec la plaque de support.

2. Boîtier destiné à contenir des disques compacts suivant la revendication 1, caractérisé en ce que le nez d'arrêt fait corps en degré ou gradin avec une nervure verticale (4) de l'élément de serrage (3).

3. Boîtier destiné à contenir des disques compacts suivant la revendication 1, caractérisé en ce que le nez d'arrêt (11) fait corps en arrondi avec une nervure verticale (4) de l'élément de serrage (3).

4. Boîtier destiné à contenir des disques compacts suivant la revendication 1, caractérisé en cite nez d'arrêt (11) fait corps en talus avec une nervure verticale (4) de l'élément de serrage (3) et en ce que la partie en talus présente une face de délimitation qui s'étend essentiellement en oblique par rapport à la nervure verticale (4).

5. Boîtier destiné à contenir des disques compacts suivant l'une quelconque des revendications 1 à 4, caractérisé en ce qu'au moins l'un des éléments de serrage (3) présente une nervure radiale (5) qui, partant de la nervure verticale (4), s'étend en direction du point central (7) du support.

6. Boîtier destiné à contenir des disques compacts suivant l'une quelconque des revendications 1 à 5, caractérisé en ce que, suivant la périphérie (8) de l'ouverture centrale (9) les nervures radiales (5) ont été prévues en alternance dans les zones d'extrémités opposées l'une à l'autre des nervures verticales (4).

7. Boîtier destiné à contenir des disques compacts suivant l'une quelconque des revendications 1 à 6, caractérisé en ce que les nervures verticales (4), partant d'une plaque de support (13) se dressent d'un côté de l'une des faces d'appui (6) de la plaque de support (13).

8. Boîtier destiné à contenir des disques compacts suivant l'une quelconque des revendications 1 à 6, caractérisé en ce que les nervures verticales (4) se dressent dans des sens opposés l'un à l'autre aux deux faces d'appui (6) qui délimitent la plaque de support (13).

9. Boîtier destiné à contenir des disques compacts suivant l'une quelconque des revendications 1 à 8, caractérisé en ce que l'ouverture (10), dans le sens périphérique, s'étend sur la largeur totale de l'élément de serrage (3).

10. Boîtier destiné à contenir des disques compacts suivant l'une quelconque des revendications 1 à 8, caractérisé en ce que l'ouverture (10) et le nez d'arrêt (11), dans le sens périphérique, s'étendent sur une zone partielle de l'élément de serrage (3) et ont été prévus essentiellement symétriques par rapport à un axe médian (14) de l'élément de serrage (3).

11. Boîtier destiné à contenir des disques compacts suivant l'une quelconque des revendications 1 à 8, caractérisé en ce qu'à au moins un des éléments de serrage (3) correspondent au moins deux ouvertures (10) qui sont séparées l'une de l'autre par une nervure de liaison.

12. Boîtier destiné à contenir des disques compacts suivant l'une quelconque des revendications 1 à 11, caractérisé en ce que les ouvertures (10) ont été prévues asymétriques par rapport à l'axe médian (14).

13. Boîtier destiné à contenir des disques compacts suivant l'une quelconque des revendications 1 à 12, caractérisé en ce que l'ouverture (10) va en se réduisant de section dans le sens opposé à l'élément de serrage (3).
